(19) Europäisches Patentamt
European Patent Office
Office européen des brevets

(11) **EP 2 395 367 A1**

(12) **EUROPEAN PATENT APPLICATION**

(43) Date of publication:
**14.12.2011 Bulletin 2011/50**

(51) Int Cl.:
*G01S 5/10* (2006.01) *G01S 5/02* (2010.01)

(21) Application number: **10275059.3**

(22) Date of filing: **07.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **BAE SYSTEMS plc
London SW1Y 5AD (GB)**

(72) Inventor: **The designation of the inventor has not yet been filed**

(74) Representative: **BAE SYSTEMS plc
Group IP Department
P.O. Box 87
Warwick House
Farnborough Aerospace Centre
Farnborough
Hampshire GU14 6YU (GB)**

(54) **Improvements in or relating to differential carrier phase determination**

(57) Methods and systems for determining the position of a mobile unit (2) using differential carrier phase positioning are described. The differential carrier phase positioning technique is applied to a first radio signal of opportunity having an unpredictable phase modulation scheme. The mobile unit (2) and a reference unit (4) are phase-synchronised using a second radio signal acting as a common-view phase reference. Radio signal data is then synchronously captured at the mobile unit (2) and the reference unit (4) relating to the first radio signal. Radio signal data captured by the reference unit (4) is transmitted to the mobile unit (2). Thereafter, a comparison can be made at the mobile unit between the radio signal data captured by the reference unit (4) with that captured by the mobile unit (2) to determine the carrier phase differential of the first radio signal, thereby determining a position solution for the position of the mobile unit (2).

Figure 3

## Description

Field of the invention

The present invention relates to a method and system for determining the difference in the carrier phase of a radio signal having an unpredictable phase modulation scheme as received by a mobile unit relative to a reference unit. In particular, the determination of the phase difference can be used to synchronise and/or localise the mobile and/or reference unit. The radio signal having an unpredictable modulation scheme may be an opportunistic radio signal, for example, television, cellular, wi-fi, public radio and the like.

Background to the invention

A commonly used resource for outdoor navigation is satellite positioning technology, otherwise known as a Global Navigation Satellite System (GNSS). One example of a fully operational GNSS is the United States NAVSTAR Global Positioning System (GPS) - which will be referred to below when generally discussing satellite positioning technology. However, it will be appreciated that satellite positioning technologies other than GPS may be used in its place.

The operation of GPS is well known in the art, and generally employs a GPS receiver arranged to receive signals from a number of GPS satellites. Each satellite broadcasts its own location and providing the GPS receiver can receive the broadcasted signals from a sufficient number and distribution of satellites, the GPS receiver can infer its own position. In addition, the GPS receiver can synchronise itself with "GPS time" - i.e. the atomic clock references onboard the GPS satellites.

An entity wanting to self-localise may therefore employ a positioning system having a GPS receiver. However, in the event that a GPS receiver is not able to infer its position - for example due to signal obstruction or interference, then it may be possible for the positioning system to make use of other positioning resources.

Another type of positioning resource that can be used is radio signals other than those transmitted by GPS satellites - for example, terrestrial radio signals transmitted by cellular telephone base stations, television, radio transmitters and the like. The signals transmitted by these transmitters may be exploited by using one of a number of different known radio localisation techniques such as multi-lateration, Enhanced Observed Time Difference (EOTD) and differential radio positioning.

**Differential radio positioning**

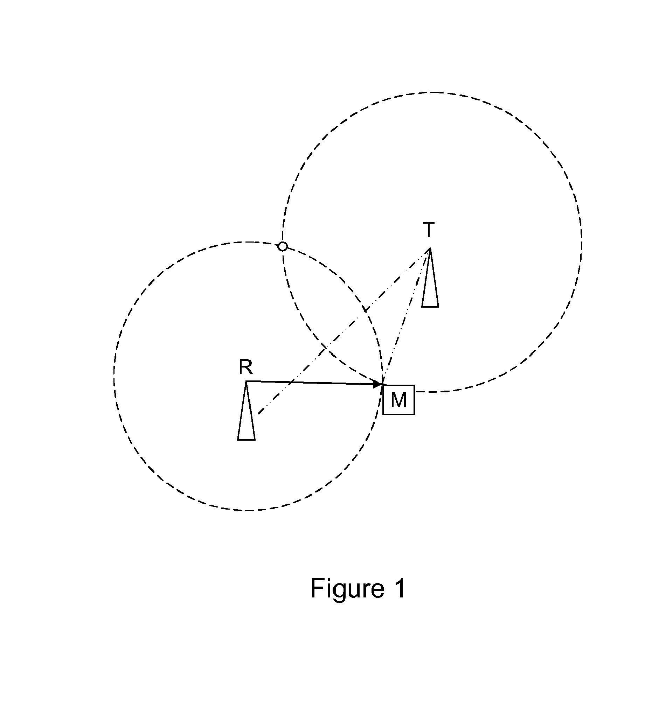

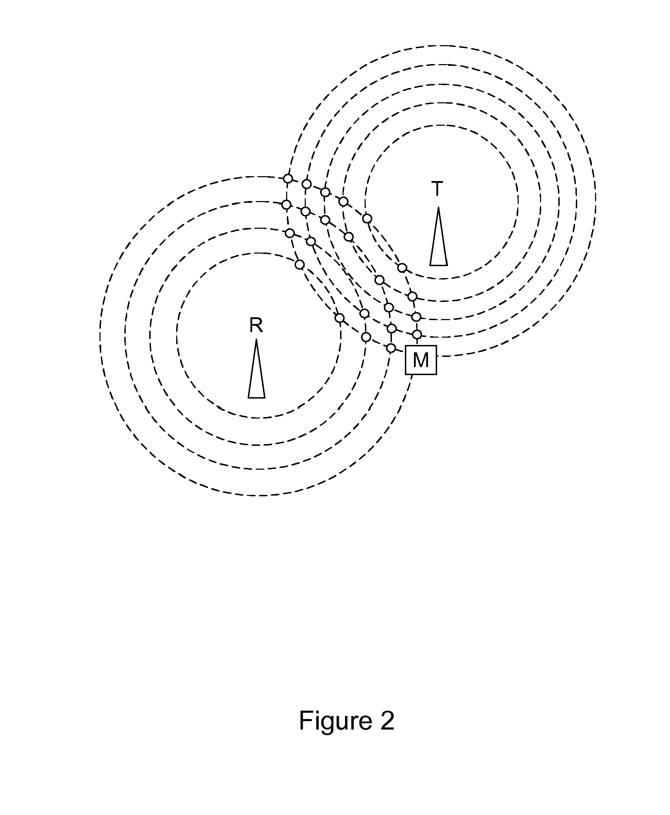

Differential radio positioning allows the tracking of a mobile 'roving' receiver by using a reference unit that is usually stationary and at a known position. Both the reference and mobile unit are synchronised and each receive radio signal data from a common set of signal sources. A particular metric for the gathered radio signal data is measured at both the stationary reference unit and mobile unit and the differences between the measured metrics are used to determine the spatial separation of the reference unit and the mobile unit, thereby allowing the position of the mobile unit to be resolved. The metric measured may be, for example, time of flight, or carrier phase as will be described with reference to Figures 1 and 2.

Figure 1 is a schematic diagram showing a simplified 2D example of a differential radio positioning technique using time of flight as the distinguishing metric. A stationary transmitter T is a standard GSM transmitter. Its radio signals can be received by a mobile unit M. The radio signals from the transmitter T can also be received by a stationary reference unit R. The reference unit R is able to transmit radio signals which can be received by the mobile unit M. The positions of the reference unit R and the transmitter T are known to the mobile unit M. The mobile unit M also knows its own position via the mobile unit M employing a positioning system such as GPS. However, it is desirable for the mobile unit to have a system that can supplement or even substitute GPS in the event that the mobile unit M becomes GPS-denied.

The mobile unit M and the reference unit R are synchronised with each other and so it is possible for the absolute time of flight of a signal transmitted by the reference unit R to the mobile unit M to be calculated. Therefore, the distance between the mobile unit M and the reference unit R can be calculated (as the speed of the radio signal is known). Referring to the 2D schematic diagram, this places the mobile unit M somewhere on a circle centred on the reference unit R. To resolve and track its exact location, further information is needed by the mobile unit.

A useful piece of information is the distance between the mobile unit M and the transmitter T. The dashed circle centred on the transmitter T denotes this information. If this information can be determined then the position of the mobile unit M can be more easily determined. In particular, the two intersection nodes of the two dashed circles centred respectively on the reference unit R and the transmitter T represent two possible solutions for the location of the mobile unit M. These are represented diagrammatically in Figure 1 by either the mobile unit M (the correct solution) or a small circle (an incorrect solution) at the other intersection of the two dashed circles.

One way of choosing between the two solutions is to select the position that is closest to the last known location of the mobile unit (for example, as determined via GPS just prior to loss of GPS signal).

Of course, if there are additional terrestrial transmitters from which the mobile unit M is able to self-localise then a more certain determination of the location of the mobile unit M can be made.

In any case, to determine the distance between the mobile unit M and the transmitter T it is necessary to calculate the time of flight of a signal from the transmitter T to the mobile unit M. This cannot be determined by the mobile unit M alone as the transmitter T and the mobile unit M are not synchronised (and so the absolute time at which a signal is transmitted by the transmitter T is unknown). However, this information can be determined through the use of differential radio positioning.

Radio signals that are transmitted by the transmitter T contain code words that can be used to uniquely identify a specific portion of a radio signal. The reference unit R records the absolute time at which it receives the specific portion of the radio signal from the transmitter T. This information is forwarded onto the mobile unit M. The mobile unit M also receives the same specific portion of the radio signal, as identified by the code words, and records the absolute time at which it was received by the mobile unit M. As the reference unit R is synchronised with the mobile unit M, it is therefore possible to determine the difference in time between the reference unit R receiving the same radio signal as the mobile unit M. In view of the fact that the locations of the reference unit R and the transmitter T are known, the time of flight of the radio signal from the transmitter T to the mobile unit M can therefore be calculated, and thus so can the distance between them.

Thus, here we can see that it is possible for a mobile unit M to self-localise using so called 'signals of opportunity' by using a reference unit R that is able to relay the necessary information. Importantly, although the cooperative reference unit R is synchronised with the mobile unit M, the radio signals 'of opportunity' originate from a radio signal source with which neither the mobile unit M nor the reference unit R are synchronised.

This technique can be extended to multiple unsynchronised radio signal sources and to multiple mobile units. So long as there is at least a single cooperative reference unit with which the mobile units are synchronised, it is possible for the mobile unit(s) to self localise.

So far, differential radio positioning has been explained with reference to Figure 1 in which the time of flight of unique code words within the radio signal has been used as the metric. However, techniques can be used in which the carrier signal itself - rather the code-words supported by the carrier signal - can be used for localisation in the context of differential positioning. One such technique is differential carrier phase positioning.

**Carrier phase positioning techniques**

Differential carrier phase positioning can allow for positioning with precision orders of magnitude greater than time of flight of code-words measurements. However, in contrast with code-word based differential positioning, differential carrier phase positioning does not provide a unique ranging metric.

In particular, as phase can only be measured as a fraction of a single wavelength, it is not a unique ranging measurement but is valid at multiple positions between the transmitter and receiver.

Referring to Figure 2, this leads to the integer ambiguity problem, known to those skilled in the art, where the number of whole wavelengths between the receiver and transmitter is not known, and so there a multiple valid position solutions.

Many methods are known by those skilled in the art to solve this problem, the simplest method being to initialise the system at known locations and to constantly receive radio signals so as to prevent 'cycle slips'. If all radio reception is lost, synchronisation and accurate localisation may also be lost. As will be appreciated, continual monitoring can be very processor and power intensive. This is particularly undesirable for a mobile unit embodied as a portable unit. Furthermore, differential radio positioning may require the reference unit to transmit to the mobile unit a large stream of information. This can take up valuable bandwidth across the communication channel.

An additional problem is that differential carrier phase positioning is only effective when the phase or frequency modulation scheme of the radio signal source is known. This is not necessarily the case when using signals of opportunity. If the modulation scheme information is not known then it is necessary to attempt to work out the phase modulation scheme. This task is relatively straightforward for previously unknown Amplitude-Modulated (AM) signals of opportunity that have highly regular frequency and phase. However, for more prevalent frequency or phase modulated signals, this task is much more difficult, if not impossible.

As such, differential carrier phase positioning is not considered appropriate for use with a significant proportion of opportunistic radio signal sources, especially those with a unpredictable modulation schemes.

**Synchronisation**

As mentioned, differential positioning technique can require tight synchronisation of the reference unit and the mobile unit. This can be achieved by having a very reliable clock onboard both the reference unit and the mobile unit - for example, an atomic clock timing reference. Such timing references can be very heavy and expensive and not suited to portable devices. As such, it is desirable to get around this issue by synchronising in another way. For example, it is known in the art to achieve synchronisation levels between the reference unit and the mobile unit of tens of nanoseconds or better by locking each to the same absolute time as derivable via GPS signals. However, in the event that GPS is not available (for example due to environmental conditions and/or jamming), then synchronisation can quickly be lost. This is especially the case for small, light and inexpensive mobile units that have an inaccurate on-board clock - the drift of which causes rapid loss of synchronisation and thus remove the ability to utilise differential corrections.

One way that this problem can be overcome is by employing techniques such as two-way time transfer in order to maintain synchronisation between the reference and mobile units. Whilst this method is satisfactory in maintaining synchronisation, there remains room for improvement in terms of continuity, power consumption and degree of synchronisation.

Finally, it will be appreciated that if the carrier phase of a given transmission is easily extractable without demodulating the broadcast then tight synchronisation between reference and mobile is not required (and therefore is not normally consider to be a problem). This is because a double-difference correction, removing the effects of receiver and transmitter clock errors, only requires a level of synchronisation better than the drift associated with the poorest quality clock (typically the receiver's clock), which will the order of a few seconds. However if the carrier phase of the transmitted signal is not easily extracted (e.g. frequency modulated signals of opportunity) then very tight synchronisation is required to coherently demodulate the two radio signal captures at the mobile and reference units.

It is an object of the present invention to alleviate the above-mentioned drawbacks of the prior art.

According to the present invention there is provided a method of determining the position of a mobile unit using differential carrier phase positioning as applied to a first radio signal of opportunity having an unpredictable phase modulation scheme, the method comprising:

phase-synchronising the mobile unit and a reference unit using a second radio signal acting as a common-view phase reference;

synchronously capturing radio signal data at the mobile unit and the reference unit relating to the first radio signal;

transmitting radio signal data captured by the reference unit to the mobile unit; and

comparing, at the mobile unit, the radio signal data captured by the reference unit with that captured by the mobile unit to determine the carrier phase differential of the first radio signal thereby determining a position solution for the position of the mobile unit.

Advantageously, by using a second radio signal acting as a common-view phase reference, it is possible to utilise the first radio signal of opportunity for positioning, even though the first radio signal of opportunity has an unpredictable phase modulation scheme. The phase reference allows the reference unit and the mobile unit to capture phase-aligned data from a first radio signal source transmitting the first radio signal of opportunity. The information captured at the reference unit is then made available at the mobile unit by transmitting this information from the reference unit to the mobile unit. Therefore, the mobile unit then is in possession of two sets of phase aligned radio signal data - one that it has recorded for itself and one that has been recorded by the reference unit. By comparing the difference between these two sets of data, the phase difference can be determined and utilised to determine the position of the mobile unit.

Furthermore, a common-view phase reference is advantageous because the reference unit and the mobile unit can consistently maintain very stable and accurate synchronisation without the need for synchronisation information to be transmitted between the mobile unit and the reference unit. This can substantially reduce the power consumption of the mobile unit and the reference unit. Furthermore, the need to carry a sufficiently stable onboard clock reference (such as an atomic clock reference) is obviated. Therefore, the mobile unit and the reference units can be cheaper and lighter.

A suitable common-view phase reference may be a terrestrial radio transmitter having a predictable phase modulation scheme - for example, an AM (Amplitude Modulated) radio transmitter. Advantageously, when such a phase reference is used, synchronisation of the mobile and reference unit is possible even if the mobile unit and/or reference unit cannot lock onto a synchronisation source such as GPS time, for example, in the event that the mobile and reference units are operating in a GPS-denied environment. It will also be appreciated that the synchronisation of a common-view terrestrial radio signal transmitter can be far more reliable than GPS time.

Preferably, the first radio signal of opportunity is a terrestrial phase or frequency modulated (FM) radio signal.

Advantageously, terrestrial radio signals (such as AM and FM radio signals) are prolific in a wide range of operating environments - including environments in which a GPS system cannot operate.

Preferably, the method comprises compressing captured radio signal data prior to transmission from the reference unit to the mobile unit by translating radio signal data from the time domain into the frequency domain.

Advantageously, this can remove the need to transmit a vast quantity of data from the reference unit to the mobile unit. In particular, in order to carry out the differential analysis, the mobile unit would normally need to analyse the difference between the full radio signal as captured by itself and also the reference unit. The transmission of the full captured signal of each radio signal requiring differential analysis would therefore traditionally require sending millions of samples from the time domain. This would require a high bandwidth connection between the reference unit and the mobile unit. By translating the captured signal from the time domain into the frequency domain means that typically only tens or hundreds of samples need be transmitted from the reference unit to the mobile unit.

Furthermore, the mobile unit may be arranged to translate the radio signal data that it captures from the time domain into the frequency domain prior to comparison with the data that is received from the reference unit. This is because data sets from the frequency domain be directly compared with one another in order to resolve the carrier phase differential between the mobile unit and the reference unit. This approach also has the benefit of reducing the data storage space needed on the mobile unit to store the data needed to carry out the differential analysis for the same reasons expressed above with regard to reducing bandwidth usage.

Preferably, the mobile unit determines its position without transmitting information to the reference unit.

Advantageously, this means that the mobile unit need not be equipped with a transmitter, thereby reducing the cost and complexity of the mobile unit.

Preferably, the method comprises logging state information at the mobile unit, the state information comprising variables and variances associated with the geographical position over time and/or the velocity over time of at least one of:

the mobile unit, the reference unit, a first radio signal source associated with the first radio signal and a second radio signal source associated with the second radio signal.

Preferably, the method comprises estimating the current and/or future position of the mobile unit, the reference unit, the first radio signal source and/or the second radio signal source from the logged state information.

Advantageously, by logging state information, the mobile unit is able to build up a state vector of position and velocity for itself and other entities such as the reference unit and radio signal sources. The state vector includes variables and variances - and so estimated values can be logged, updated and improved over time as the mobile unit gathers additional information. As the information contained within the state vector relates to time, velocity and position, the different variables can be correlated with one another. As such, simply by receiving and logging additional information relating to one variable can improve the estimated values of another. This can fundamentally improve the way in which the position of the mobile unit can be determined.

Preferably, the estimating comprises using a Bayesian estimator such as a Kalman filter, loaded with assumptions and/or models about the behaviour of the mobile unit, the reference unit, the first radio signal source and/or the second radio signal source.

Preferably, the variables and variances of the state information are updated in response to the carrier phase differential determination calculated by the mobile unit in the comparing step.

Preferably, the variables and variances of the state information are updated in response to an input from an inertial measurement unit (IMU), that may be at the mobile unit.

Preferably, the variables and variances of the state information are updated in response to an input from a GPS unit that may be at the mobile unit.

Preferably, the variables and variances of the state information are updated in response to a local clock that may be at the mobile unit.

Preferably, the variables and variances of the state information are updated in response to user-inputted data that may be entered at the mobile unit.

Preferably, the variables and variances of the state information are updated in response to a synchronisation trigger common to the mobile unit and the reference unit.

Preferably, the method comprises synchronising the reference unit and the mobile unit to a first level of precision prior to the phase-synchronisation step, said phase-synchronisation step being used to improve the synchronisation between the reference unit and the mobile unit to a second level of precision.

Preferably, the capture rate of the mobile unit is modified in response to the acceleration of the mobile unit.

Preferably, the method comprises using a secondary positioning technique to obtain a position determination of the mobile unit to a precision sufficient to discard a set of incorrect position solutions determined by the comparing step. Preferably, the secondary positioning technique obtains a position determination of the mobile unit to a precision sufficient to discard all of the incorrect position solutions determined by the comparing step.

Advantageously, the use of a secondary positioning technique can overcome the integer ambiguity problem. As stated, this is a significant problem associated with differential carrier phase radio in which a plurality of mathematically valid, but geographically incorrect position solutions are possible - as shown in Figure 2. The present invention overcomes this by using a coarse positioning technique to obtain an approximate estimate of the position of the mobile unit, the estimated position being sufficiently precise to allow the correct selection of (preferably) only one of the plurality of mathematically valid positioning solutions, as derived from comparing the difference between the carrier phase received by the mobile unit against that received by the reference unit. A further advantage associated with this technique is that it obviates the need for the mobile unit to continuously monitor the radio signal data relating to the first radio signal, thereby minimising power consumption.

The secondary positioning technique may comprise cross correlating the modulated waveforms of radio signals, optionally including the first radio signal and/or the second radio signal.

According to a second aspect of the present invention there is provided a method of determining the difference in the carrier phase of a first radio signal having an unpredictable phase modulation scheme as received by a mobile unit relative to a reference unit, the carrier phase difference determination being suitable for synchronising the mobile unit and reference unit and/or localising the mobile unit and/or reference unit, the method comprising:

phase-synchronising the mobile unit and a reference unit using a second radio signal acting as a common-view phase reference;

synchronously capturing radio signal data at the mobile unit and the reference unit relating to the first radio signal;

transmitting radio signal data captured by the reference unit to the mobile unit; and

comparing, at the mobile unit, the radio signal data captured by the reference unit with that captured by the mobile unit to determine the carrier phase differential of the first radio signal.

According to a third aspect of the present invention there is provided a method of synchronising a mobile unit and a reference unit using a radio signal having a predictable phase modulation scheme as a common-view timing and/or phase reference. Preferably, the radio signal originates from a terrestrial radio signal transmitter. The radio signal may be a radio signal of opportunity. Preferably, the radio signal is an Amplitude Modulated radio signal.

According to a fourth aspect of the present invention there is provided a carrier medium for carrying a computer readable code arranged to control one or more computing devices to carry out the method according to the first, second or third aspect of the present invention.

According to a fifth aspect of the present invention there is provided a mobile unit arranged to carry out a method according to the first, second or third aspect of the present invention with a cooperative reference unit.

Preferably, the mobile unit comprises:

a first radio signal receiver for receiving a first radio signal of opportunity having an unpredictable phase modulation scheme;

a phase-synchronisation module arranged to synchronise the mobile unit with a reference unit by receiving a second radio signal acting as a common-view phase reference;

a data capture module arranged to capture radio signal data relating to the first radio signal synchronously with the reference unit;

a data receiver arranged to receive radio signal data transmitted by the reference unit about the first radio signal; and

a phase difference calculator arranged to compare the radio signal data captured by the reference unit with that captured by the mobile unit to determine the carrier phase differential of the first radio signal.

Preferably, the mobile unit is arranged to use the carrier phase differential to determine a position solution for the position of the mobile unit.

Preferably, the mobile unit comprises a compression module arranged to compress captured radio signal data prior to comparison with radio signal radio received from the reference unit by translating radio signal data from the time domain into the frequency domain.

According to a sixth aspect of the present invention there is provided a reference unit arranged to carry out a method according to the first, second or third aspect of the present invention with a cooperative mobile unit.

Preferably, the reference unit comprises:

a first radio signal receiver for receiving a first radio signal of opportunity having an unpredictable phase modulation scheme;

a phase-synchronisation module arranged to synchronise the reference unit with a mobile unit by receiving a second radio signal acting as a common-view phase reference;

a data capture module arranged to capture radio signal data relating to the first radio signal synchronously with the mobile unit;

a data transmitter arranged to transmit radio signal data to the mobile unit about the first radio signal for use by the mobile unit to determine the carrier phase differential of the first radio signal.

Preferably, the reference unit comprises a compression module arranged to compress captured radio signal data prior to transmission to the mobile unit by translating radio signal data from the time domain into the frequency domain.

According to a seventh aspect of the present invention there is provided a navigation system arranged to carry out a method according to the first, second or third aspect of the present invention. Preferably, the navigation system comprises a mobile unit according to the fifth aspect of the present invention and a reference unit according to a sixth aspect of the present invention.

It will be understood that features of the different aspects of the present invention may be combined where context allows.

Brief description of the figures

Specific embodiments of the present invention will now be described, by way of example only, with reference to the following drawings in which:

Figure 1 shows a schematic diagram showing a simplified 2D example of a differential radio positioning technique employing code-word time of flight as a metric;

Figure 2 shows a schematic diagram showing a simplified 2D example of a differential radio positioning technique employing the carrier phase as a metric;

Figure 3 shows a schematic diagram of a navigation system according to a first aspect of the present invention, placed within an operational environment;

Figure 4 shows a schematic diagram of a mobile unit of the navigation system of Figure 3;

Figure 5 shows a schematic diagram of a reference unit of the navigation system of Figure 3; and

Figure 6 shows a schematic diagram illustrating an integer ambiguity problem associated with differential carrier phase positioning.

Detailed description of the preferred embodiment

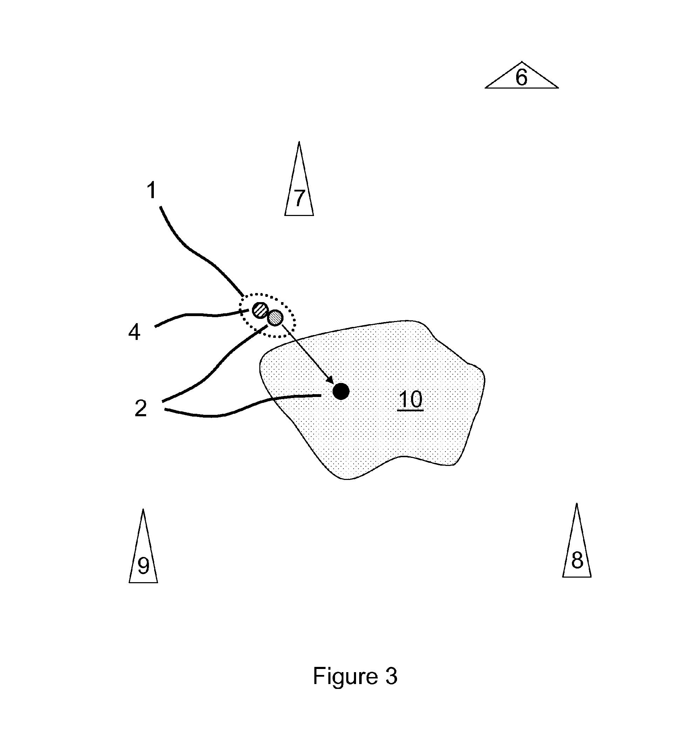

Referring to Figure 3 there is schematically shown a navigation system 1 comprising a mobile unit 2 and a reference unit 4. The navigation system 1 is shown in Figure 3 within an operational environment having a medium wave AM transmitter 6, a GSM transmitter 7, a television UHF transmitter 8 and an FM radio station VHF transmitter 9 all of which are spaced relative to one another and the navigation system 1. The approximate frequency ranges of these transmitters are as follows:

| Transmitter | Approximate frequency range |
| --- | --- |
| AM transmitter 6 | 500 kHz - 1500 kHz |
| GSM transmitter 7 | 850MHz - 960MHz and 1805MHz-1880 MHz (UK bands) |
| TV UHF transmitter 8 | 400 MHz to 850 MHz |
| VHF transmitter 9 | 88 MHz to 108 MHz |

As will be described below, the mobile unit 2 is able to venture into a GPS-denied region 10 and self localise by utilising the transmitters 6, 7, 8, 9 and the cooperation of the reference unit 4.

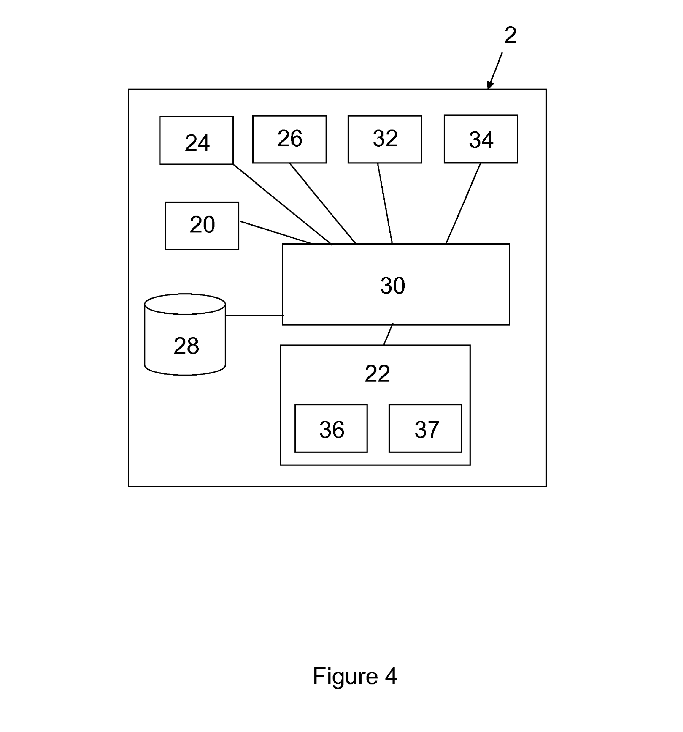

Referring to Figure 4, the mobile unit 2 comprises a GPS receiver 20, a terrestrial radio signal receiver 22, an Inertial Measurement Unit (IMU) 24, an interface module 26, a database 28, a processor 30, a user interface module 32 and a position display module 34.

The terrestrial radio signal receiver 22 comprises a 'low frequency' receiver module 36 for receiving medium wave radio signals with a frequency of below 3MHz. The terrestrial radio signal receiver 22 also comprises a high frequency receiver module 37 for receiving 'high frequency' radio signals with a frequency of between 3MHz and 3000MHz. It will be understood that the specific frequency ranges that the low frequency receiver module 36 and high frequency receiver module 37 are arranged to receive are provided as guidance for this example only. In addition, in alternatives, the terrestrial radio signal receiver 22 may not necessarily have separate modules for receiving separate frequency ranges, but in fact a single terrestrial radio signal receiver 22 can be arrange to receive radio signals of all desired frequency ranges.

It will be understood that the desired solution would be a multi-channel system with approximately ten flexible channels with selectable antenna able to tune to any frequency and gather data as required, and one or more scanning channels per waveband constantly sweeping the band picking out the set of strongest signals and determining what they are, modulation scheme, identification, etc and maintaining a priority list for the flexible channels based on signal strength, bandwidth, range, fundamental accuracy, location, etc. However, for simplicity sake, a two-channel system is shown in relation to the present embodiment.

The low frequency receiver module 36 is arranged to receive radio signals transmitted from a source such as the medium wave AM transmitter 6. The high frequency receiver module 37 is arranged to receive radio signals transmitted from sources such as the GSM transmitter 7, the television UHF transmitter 8 and the FM radio station VHF transmitter 9.

The GPS receiver 20 and terrestrial receiver 22 collect data from respective radio signals as is known in the art, and send their data to the processor 30. The processor 30 also receives data from the IMU 24, and optionally, the interface module 26. The interface module 26 may arranged to be connected to other devices, for example receivers arranged to receive radio signals other than those that can be receiver by the terrestrial radio signal receiver 22. The processor 30 is arranged to store the received data in the database 28. The processor 30 is also arranged to process the data received from input modules 20, 22, 24, 26, and store the resulting processed data in the database 28.

The database 28 also stores map images which are preloaded onto the database 28 and fetched by the processor 30 when needed.

Processed data comprises positional data which, together with the appropriate map images may be outputted by the processor to the position display module 34 which can then display an appropriate map to a user showing the location of the mobile unit 2 on that map. The user interface 32 can also be used by the user to configure the processor 30, and so the operation of the mobile unit 2.

The GPS receiver 20 receives GPS radio signals from a number of GPS satellites. Any radio signals that are received are fed to the processor 30 for processing and storage in the database 28. Using prior known techniques, the processor can use data from the GPS receiver 20 to determine the position of the mobile unit 2, and display the position of the mobile unit 2 to a user, for example overlaid on a suitable map image.

At the same time, the terrestrial radio signal receiver 22 may receive radio signals from a number of radio signal transmitters such as the medium wave AM transmitter 6, the GSM transmitter 7, the television UHF transmitter 8 and the FM radio station VHF transmitter 9. These radio signals are also fed to the processor 30.

In order to use the terrestrial radio signals for self-localisation, the mobile unit 2, needs to have access to information about the location of the transmitters of the terrestrial radio signals received by the terrestrial receiver 22. This information may be preloaded in the database 28, or obtained via an external source (for example, by downloading the information, or by a user inputting this information via the user interface 32).

The Inertial Measurement Unit (IMU) 24 also passes IMU information to the processor relating to the speed, acceleration and orientation of the mobile unit 2.

Therefore, it can be seen that the mobile unit 2 receives and logs information from a number of different sources relating to its state and the state of its environment.

The state information that is received by the mobile unit 2 is stored in the database 28 and processed by the processor 30 as a number of different variables. For example, there may be variables associated with:

a) the distance between the mobile unit 2 and each of the terrestrial radio signal transmitters;

b) the strength of the radio signal received by the mobile unit from each transmitter;

c) the timing offset between onboard clocks of the mobile unit 2 and the reference unit 4;

d) the absolute position of the mobile unit 2 on Earth as derived from the GPS receiver 20;

e) GPS time as derived from the GPS receiver 20;

f) speed, acceleration, orientation as derived from the inertial measurement unit 24;

g) the absolute position of the reference unit 4 on Earth, as contained in a message transmitted by the reference unit 4 to the mobile unit 2.

as well as others, as will be apparent to a person skilled in the art.

The variables accessible by the mobile unit 2 can be used to reinforce one another. For example, if the GPS receiver 20 provides successive updates about the position of the mobile unit 2 whilst it is moving, then this can be used to determine the speed of the mobile unit 2. The speed of the mobile unit 2 may also be derived from the inertial measurement unit 24. As well as providing redundancy, it is possible for variables to be correlated with one another in a synergistic manner.

A simple example of this synergy is illustrated in Figure 1; the correlation between a number of variables, each relating to the distance of the mobile unit 2 to a different transmitter, is represented by the intersection of circles originating from each transmitter. These distance variables can thus be used synergistically to determine the position of the mobile unit 2 using a trigonometric relationship. It will be understood that more complicated relationships between variables can be established and also used to minimise uncertainty about variables values.

In particular, variable values and associated variance values are stored as a state vector within the database 28. The processor 30 applies algorithms to the state vector so that variable values and variances values are modified in response to an update to linked variable values. Variables can be linked to one another algorithmically via their associations with parameters such as time, velocity and position. Thus, simply by receiving and logging additional information relating to one variable can improve the estimated values of another.

It will be understood that state information about the mobile unit, about the reference unit, and other entities such as transmitters can be incorporated into the state vector of the mobile unit 2 to aid localisation.

Furthermore, as the state vector is updated, predictions can be made about the future states using past trends. For example, if the mobile unit is moving at a constant velocity, it can be assumed that it will continue to do so unless contradicting data is received. From this erroneous data (from example, resulting from radio signal interference) can be discarded. The predictions can be made using a Bayesian estimator such as a Kalman filter, loaded with assumptions and/or models about the behaviour of the mobile unit, the reference unit, the first radio signal source and/or the second radio signal source.

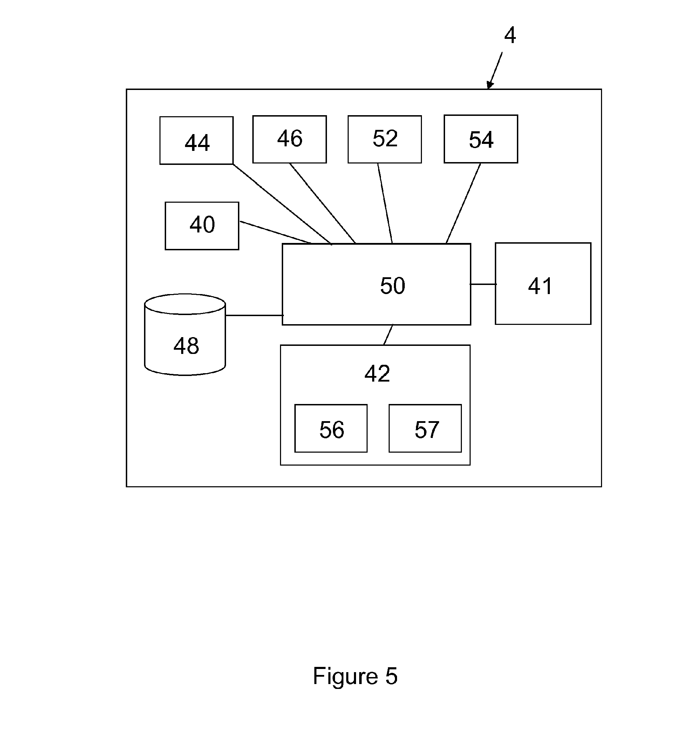

Referring to Figure 5, a schematic diagram of the reference unit 4 of the navigation system 1 is shown. The majority of the components of the reference unit 4 are similar in type and operation to those components of the mobile unit 2 and will not be described in detail in the interests of brevity. In particular, the reference unit 4 also comprises a GPS receiver 40, a terrestrial radio signal receiver 42, an Inertial Measurement Unit (IMU) 44, an interface module 46, a database 48, a processor 50, a user interface module 52 and a position display module 54. The terrestrial radio signal receiver 42 comprises a low frequency receiver module 56 and a high frequency receiver module 57.

In addition, the reference unit 4 comprises a radio signal transmitter 41 that is able to transmit information from the reference unit 4 which can then be received at the terrestrial radio signal receiver 22 of the mobile unit 2. This forms a basis for the differential radio positioning technique in that the reference unit 4 is able to communicate to the mobile unit 2 the terrestrial radio signal information that the reference unit 4 has received. By comparing this information with the terrestrial radio signal information that the mobile unit 2 has received, the differential information can be calculated and utilised for localisation of the mobile unit 2 as will be generally described as follows.

Referring back to Figure 3, the mobile unit 2 and the reference unit 4 both start at the same location. In the specific example, it can be assumed that the reference unit 4 is a vehicle-mounted unit. The vehicle is stationary, and a user, carrying the hand-portable mobile unit 2 is to depart from the vehicle and explore the surrounding area part of which is under a dense forest canopy and so can be referred to as a GPS-denied region 10. During this time, it is desirable for the user of the mobile unit 2 to know his or her position, and so the mobile unit 2 needs to be able to self localise even when under the dense canopy.

At the start of the localisation process, the navigation system 1 is initialised. The vehicle mounted reference unit 4 determines its position relatively coarsely (i.e. within 10-15 metres) using the onboard GPS receiver 40. To gain a more precise fix on its location, the reference unit 4 can also utilise the radio signals of opportunity originating from the surrounding radio signal transmitters. In particular, standard radio localisation techniques such as multi-lateralation can be used as is known in the art. These techniques rely on the availability of a number of resources such as the knowledge of the precise location of these radio signal transmitters and an accurate clock. It is assumed that these resources are available to the reference unit 4. In particular, the location of the transmitters 6, 7, 8, 9 are pre-stored in its database 48 and the reference unit 4 can maintain a highly stable and accurate clock via an onboard atomic clock reference, or alternatively by being locked onto GPS time. In any case, the absolute position of the reference unit 4 on earth is obtained to within a sub-metre accuracy. The position of the reference unit 4 is relayed to the mobile unit 2, which is also capable of determining its own location to the same degree of accuracy. The mobile unit 2 is only able to do this so long as it has a stable and accurate clock reference. As the mobile unit 2 is hand-portable, then it does not have access to an onboard atomic clock reference, and so relies on a lock onto GPS time. It will not be possible for the mobile unit 2 to maintain this GPS lock when it is within the GPS-denied region 10. Thus, before the mobile unit 2 enters into this region, the mobile unit 2, using the cooperation of the reference unit 4, employs a differential carrier phase positioning technique to very accurately self-localise without the use of GPS. As mentioned, a very tight level of synchronisation is required for this to be possible. This is provided in this example by the medium wave AM transmitter 6.

During the initialisation period, the reference unit 4 and the mobile unit 2 each receive signals from the medium wave AM transmitter 6. The medium wave AM transmitter 6 acts a common-view phase reference for both the reference unit 4 and the mobile unit 2 allowing very tight time and phase synchronisation between the reference unit 4 and the mobile unit 2 to be achieved. In particular, as the reference unit 4 and the mobile unit 2 each know their position relatively accurately, and are also reasonably well synchronised using a common GPS time or other initial synchronisation mechanism, each can also lock onto the same series of wave-fronts from the AM signal. In more detail, as the mobile unit 2 and the reference unit 4 are synchronised, they can start 'listening for' the AM signal at the same time. Assuming that they begin at exactly the same location, they will pick up the same wave-front of the AM signal at the same time.

If the reference unit 4 and the mobile unit are separated from one another, if they start listening for the AM signal at the same time, then it may not be clear whether the wave-front received by each is the same wave-front. If the reference unit 4 is closer to the medium wave AM transmitter 6 than the mobile unit 2 then a given wave-front will reach the reference unit 4 before it arrives at the mobile unit 2. In such a case, the mobile unit 2 may instead pick up a wave-front that has already passed by the reference unit 4 thereby leading to an integer ambiguity.

This integer ambiguity is overcome by position compensating the mobile unit 2 and the reference unit 4. This allows the positions of the reference receiver 4 and the mobile receiver 2 relative to the medium wave AM transmitter 6 (acting as a common-view phase reference) to be accounted for when receiving radio signals from the AM transmitter 6.

Assuming that the reference unit 4 and the mobile unit 2 are position compensated, their initial level of synchronisation - as achieved via locking onto GPS time (or by triggering the capture process with a shared signal) can be improved using the medium wave AM transmitter as a common-view phase reference. This is done by ensuring that the phase of the radio signal that they each receive from the AM transmitter is aligned. In particular, the initial synchronisation of the reference unit 4 and the mobile unit 2 is adjusted on the basis of the (position compensated) difference in the phase measured at the reference unit 4 and the mobile unit 2.

In more specific detail, the phase of the signals from the common view AM source recorded by the mobile unit 2 and reference unit 4 will be different even though their captures are simultaneous due to slight differences in antenna location and differences in the phases of their onboard clocks. As the common view timing references are expected to be medium wave transmitters with wavelengths on the order of hundreds of metres, the effect of separations of receiver antennae of a metre or less during synchronisation will be negligible. The difference in phase measured will be dominated by the clock offset. This clock offset can therefore be measured and corrected, which in turn allows coherent demodulation of other radio signals, as described below.

This process can be interpreted as a mechanism to solve for position and phase simultaneously, similar to the standard methods required for GPS localisation and well known by those skilled in the art whereby a GPS solution involves a simultaneous calculation of position and time. Here, a state vector is maintained containing position and mobile unit phase offset estimates relative to the reference receiver's clock. During calibration the position is known and the radio data gathered is used to determine the initial phase offset. As the mobile unit 2 moves and more data is gathered, the common-view phase reference data is used along with any other localisation data to solve for the receiver's location and the phase offset. This phase offset is then used in a further location-refining stage to allow differential carrier phase positioning using all other available radio signals regardless of modulation scheme (described below). The phase offset value is not stored as a fraction of a wavelength, but as a full value including all integer wavelengths, therefore simultaneously representing the time and phase difference between the two receiver clocks. This is an important step allowing the coherent demodulation of any other radio signal. As will also be appreciated, multiple common-view phase references may also be used.

In the present example, it is not necessary for the reference unit 4 to self-localise, as it remains stationary. The challenge is for the moving mobile unit 2 to self-localise. As a result, only the mobile unit 2 needs to be able to calculate the phase difference between the AM radio signal that it receives and the AM radio signal that is received by reference unit 4. Accordingly, the phase measurement made at the reference unit 4 merely needs to be made available to the mobile unit 2. This is achieved by the reference unit 4 transmitting this information via its radio signal transmitter 41 to the terrestrial radio signal receiver 22 of the mobile unit 2.

Thus, time and phase synchronisation between the reference unit 4 and the mobile unit 2 can be maintained so long as each keep on receiving the signal from the medium wave AM transmitter 6, the positions of the reference unit 4 and the mobile unit 2 are known to the mobile unit 2, and the reference unit 4 transmits onwards its phase measurements of the medium wave AM signal to the mobile unit 2 to allow the mobile unit 2 to maintain a tight time and phase synchronisation with the reference unit 4.

As mentioned, the mobile unit 2 and the reference unit 4 initially need to be synchronised better than a certain threshold so as to be able to utilise an opportunistic radio signal having predictable phase behaviour (such as the medium wave AM signal) as a timing signal. This threshold is determined by the frequency of the opportunistic timing signal. In the case of the medium wave AM signal, this threshold is approximately half a microsecond. In the case of lower frequencies, such as the MSF 60kHz timing signal in the UK, the threshold is only 16 microseconds. In any case, in this example, locking onto GPS time provides a synchronisation level better than 100 nanoseconds and so is more than adequate. However, it will be appreciated that in alternatives, the initial synchronisation could be achieved in other ways, for example by directly connecting the mobile unit 2 and the reference unit 4 to the same physical trigger.

One other way to gain an initial level of synchronisation (and/or also a coarse estimate of position) is by using a secondary technique not reliant on a GPS lock or the need to initiate a trigger connected to both the mobile unit 2 and the reference unit 4. A suitable secondary positioning technique could be implemented though the cross-correlation of the signals of opportunity originating from the transmitters 7, 8, 9. In particular, the cross correlation of the full signals (i.e. cross correlating the modulated waveforms) can be used to provide a coarse position estimate initially, or at any point such as after a power failure or other situation where some reset of the mobile unit 2 is required. Cross correlating all available signals captured in a standard way used for Time Difference On Arrival (TDOA) differential positioning - known to those skilled in the art - can provide coarse position (~50m to ~250m depending on signals available) and timing (~0.1 microsecond to 1 microsecond) calibrations which can then be improved upon using the main differential carrier phase positioning technique. This requires a significantly higher communication bandwidth (or longer wait times on a narrow bandwidth communication link) than the main differential carrier phase positioning method, but this would typically be used only to provide initial calibrations on navigation system 1 start-up or after a reset of the mobile unit 2 during navigation through the GPS-denied region 10. By using such a secondary positioning technique, a user of the mobile unit 2 would simply remain stationary until a rough position estimate and synchronisation level had been obtained. Once obtained, the mobile unit 2 would be able to switch to using the main differential carrier phase positioning technique to provide quicker, more precise localisation during movement, and the common-view timing signal for better synchronisation.

Advantageously, the common-view timing signal permits both time and phase synchronisation between the reference unit 4 and the mobile 2, and is a significant improvement over other synchronisation methods. The mobile unit 2 does not need to transmit synchronisation information back to the reference unit 4 - and so a transmitter is not required onboard the mobile unit 2 to achieve synchronisation. This reduces the amount of radio signals occupying the airspace in which the navigation system operates thereby reducing overall radio signal interference, and also allowing the mobile unit to operate covertly. Furthermore, this method can scale very easily to accommodate a situation in which there are multiple mobile units operating relative to the same reference unit. In contrast, known methods of synchronisation such as one and two-way time transfer do not have these advantages and can be power hungry due to the need to continually transmit information between the reference unit 4 and the mobile unit 2.

Tight synchronisation achieved in this manner, as well as being useful for determining accurately the position of the mobile unit 2 as will be described, is also very useful for other purposes. In particular, tight synchronisation of separated systems allows the simultaneous capture of a number of different types of data allowing enhanced techniques such as interferometry, aperture synthesis, and synthetic aperture radar. These techniques are known to those skilled in the art, but the general principle of each is that tight synchronisation allows data to be processed as if it had been captured by a single large receiver or aperture with dimensions comparable to the separation of the receivers or apertures. This processing allows much higher resolution imagery or processing than permitted by the individual receivers or apertures. Furthermore, in an alternative in which the mobile unit 2 were to be equipped with a transmitter, tight synchronisation facilitates the ability of the mobile unit 2 and the reference unit 4 to establish secure communications with one another. For example, tight synchronisation allows the use of rapid frequency hopping schemes, making eavesdropping difficult and so can be used to execute short bursts of high bandwidth encrypted data to support covert operations.

Referring back to Figure 3, the reference unit 4 and the mobile unit 2 are thus so far locked onto the medium wave AM transmitter 6 to achieve time and phase synchronisation. In addition, the reference unit 4 and the mobile unit 2 receive radio signals transmitted from the GSM transmitter 7, the television UHF transmitter 8 and the FM radio station VHF transmitter 9 and differential phase measurements are conducted on these signals in a similar way (i.e. by the reference unit 4 passing on the data to the mobile unit 2). However, whilst the medium wave AM transmitter 6 is used in this example as a timing reference, the GSM transmitter 7, the television UHF transmitter 8 and the FM radio station VHF transmitter 9 are used for localisation.

Generally speaking, the phase of a monochromatic radio signal provides one of the highest resolution means by which ranging measurements (and so localisation) can be achieved for a given radio-based localisation system. The phase of a radio wave can typically be measured to around $1/50^{th}$ of a wavelength, corresponding to resolutions of 6cm for Frequency Modulated (FM) Very High Frequency (VHF) signals, 3-6mm for cellular GSM signals, 5-10 metres for AM Medium Wave radio, etc. Therefore, the GSM transmitter 7, the television UHF transmitter 8 and the FM radio station VHF transmitter 9 can be used to provide very precise localisation. Thus the GSM transmitter 7, the television UHF transmitter 8 and the FM radio station VHF transmitter 9 can be thought of providing 'high resolution' radio signals, whereas the medium wave AM radio transmitter 6 provides a 'low resolution' radio signal.

It will be noted that Amplitude Modulation schemes allow straightforward phase measurement as only the amplitude of the signal is modulated to broadcast data and so the signal remains a pure sine wave to a good approximation otherwise. However, frequency or phase modulation schemes, such as those originating from the GSM transmitter 7, the television UHF transmitter 8 and the FM radio station VHF transmitter 9 do not generally offer a simple mechanism for tracking the carrier phase, as the carrier phase is constantly varied in order to transmit the data.

Importantly, if these signals are 'signals of opportunity' then they are likely to have unpredictable phase modulation schemes (in contrast with the AM transmitter for which the phase is not changed).

However, as the mobile unit 2 and the reference unit 4 are time and phase locked to the medium wave AM radio transmitter 6, it is possible for the position compensated phase differences between the mobile unit 2 and reference unit 4 of each of the radio signal transmitted from the GSM transmitter 7, the television UHF transmitter 8 and the FM radio station VHF transmitter 9 to be easily determined by the mobile unit 2. Like the process carried out in respect of the medium wave AM radio signal, the reference unit 4 transmits to the mobile unit 2 the phase measurements of the 'high resolution' signals taken at the reference unit 4. These are corrected using the phase correction derived from the 'low resolution' medium wave AM radio signal.

In other words, the AM radio signal - which has a predictable phase modulation scheme - is used as a reference onto which the mobile and reference units are locked so as to make use of the radio signals having unpredictable phase modulation schemes. This is because the two sets of radio signal data (originating from the sources having unpredictable phase modulation schemes) captured at the mobile unit 2 and the reference unit 4 are phase-aligned with one another by virtue of the AM transmitter acting as a common-view time and phase reference.

Assuming the good signal geometry, as shown in Figure 3, of the 'high resolution' radio signal transmitters 7, 8, 9 around the reference unit 4 and mobile unit 2, the mobile unit 2 can then self localise using these radio signal sources. In particular, the resulting phase difference measurements are then processed using a known single, double or triple-difference technique to allow a higher-resolution position estimate to be determined. This fine correction of the position of mobile unit 2 can also be worked backwards to improve the synchronisation between the mobile unit 2 and the reference unit 4 if necessary via an iterative batch processing process or other suitable iterative or multi-pass processing method. Thus, the mobile unit 2 is able to self localise, and continue to self localise even when moving within the GPS-denied region 10.

When the mobile unit 2 is within the GPS-denied region 10, it is still able to receive the radio signals from the medium wave AM transmitter 6, the GSM transmitter 7, the television UHF transmitter 8 and the FM radio station VHF transmitter 9 even though no GPS signals can be received. As a result, the mobile unit 2 is provided with an accurate timing reference (in the form of the medium wave AM radio signal) and an accurate set of positioning resources (in the form of the radio signals transmitted from the 'higher resolution' transmitters 7, 8, 9) - all completely independent of GPS.

As mentioned earlier, this technique relies on the reference unit 4 to transmit to the mobile unit 2 data relating to radio signals from the medium wave AM transmitter 6, the GSM transmitter 7, the television UHF transmitter 8 and the FM radio station VHF transmitter 9. If this were done conventionally by passing data captured in the time domain then a huge amount of bandwidth would be required to transmit this information. In particular, the reference unit 4 would need to transmit to the mobile unit 2 the full captured signal of each of the radio signals, perhaps requiring sending millions of samples of data per radio signal per update period. The bandwidth required would have to exceed the total sum of bandwidths of the captured signals if the data were to be sent back quickly enough to allow real time operation.

**Bandwidth reduction**

The inventors of the present invention have determined that it is possible to still get the requisite information across for the differential analysis to be effectively conducted without demanding the use of such a huge amount of bandwidth. Rather than sending millions of samples of data from the time domain, the time and phase synchronisation makes it possible instead for the reference unit 4 to transmit to the mobile unit 2 data from the frequency domain. This is achieved by translating the radio signal capture windows from the time domain into the frequency domain by applying a predetermined Fast Fourier Transform (FFT) algorithm.

Referring to Figure 5, the processor 50 of the reference unit is arranged to process radio signal data from the terrestrial radio signal receiver 42 from each of the low resolution and high resolution radio signal transmitters 6, 7, 8, 9 using the FFT algorithm. For each radio signal this produces a number of values relating to so-called 'FFT bins' each of which represent a frequency range within the radio signal as is known in the art.

For each of the radio signals received by the reference unit 4, the complex values in each FFT bin are extracted (with due consideration being given to the bandwidth of each radio signal). These values are transmitted from the reference unit 4 to the mobile unit 2 via the radio signal transmitter 41 of the reference unit 41 and the terrestrial radio signal receiver 22 of the mobile unit 2.

At the mobile unit 2, the same exercise is carried out - i.e. the same FFT algorithm is applied to each received radio signal resulting in a number of values for each FFT bin in each radio signal.

For each FFT bin of each radio signal, the processor 30 multiplies the complex value calculated by the mobile unit 2 with the complex conjugate value as received from the reference unit 4. The angle of the resulting complex number is the phase difference for that FFT bin.

This phase difference is the sum of the phase difference associated with the separation of the mobile unit 2 and the reference unit 4 and the phase difference between the local clocks of the mobile unit 2 and the reference unit 4. However the synchronisation process described above using a common-view phase reference allows this phase difference associated with the receiver clock offsets to be removed, leaving only the phase difference associated with receiver separation.

Assuming successful measurement, the set of phase differences across all of the FFT bins (i.e. across the bandwidth of the radio signal) will be approximately the same. If not, and the processor 30 of the mobile unit 2 detects that there is a large variance in values above a predetermined threshold, the processor 30 is arranged to flag up erroneous measurement and not necessarily further process the data.

Assuming no erroneous measurement, a single value for the phase difference for a particular radio signal is calculated by applying a suitable statistical function (for example, the arithmetic mean or median of all the values).

As can be seen, since the only data shared between the reference unit 4 and the mobile unit 2 are the complex numbers associated with each FFT bin of each radio signal, the amount of data transmitted is very small - i.e. only tens or hundreds of numbers from the frequency domain (instead of millions of numbers from the time domain).

Importantly, this approach substantially reduces bandwidth usage and also allows any opportunistic radio signal, regardless of modulation scheme to be utilised for carrier phase positioning.

It will be understood that the FFT approach is more time consuming and processor intensive for longer data captures, but this results in a greater number of FFT bins from which to generate phase measurements. During the design of a specific navigation system, the trade-off between phase measurement samples, processing power and update rate can be determined empirically and most likely fixed to be somewhere around 10 to 100 milliseconds.

In a further refinement, it can be advantageous to forward only a particular selection of the FFT bin values calculated at the reference unit 4 to the mobile unit 2 thereby reducing the bandwidth of the communication link further. The number and specific selection of particular FFT bins can be determined to give the best phase measurement to bandwidth trade off. This approach of selecting a subset of the FFT bins may be appropriate in a situation where the signal to noise ratio is very high for a particular transmitter.

The data captures processed in the FFT must be recorded with some degree of timing accuracy at both receivers to ensure the captures contain the same section of broadcast data, captured at known times or with known timing offsets. This is achieved by the common-view time and phase synchronisation process described above. To ensure useful high-resolution phase measurements, the captures must occur within the coherence time of the high-resolution opportunistic signals, which is dependant on the bandwidth of the transmission.

The coherence times for some typical signals are 10 microseconds (VHF FM), 7 microseconds (GSM), 500 nanoseconds (DAB), 200 nanoseconds (3G) and 100 - 200 nanoseconds (UHF TV or DVB TV). Typical experimental results suggest that a synchronisation level of 30 to 100 nanoseconds is possible using MW radio broadcasts. This is adequate synchronisation for a first pass using VHF FM and/or DAB and/or cellular signals. Any error in synchronisation will be revealed as a slope in the phases revealed by the FFT correlation process described above. The gradient of the slope is a function of the synchronisation error and can be used to further correct the phase and timing synchronisation offsets determined using the common view timing reference. A gentle slope does not result in significant error on the high resolution carrier phase positioning calculations, but does provide sufficient information to correct timing and phase offset for subsequent calculations. With no measureable slope detectable in the coherence plot of these 'first pass' high resolution signals, the highest bandwidth signals such as UHF television or DVB television could then be confidently processed.

**Monitoring rate adjustment**

As previously mentioned, the mobile unit 2 is user portable and so power drain is an important consideration. One of the ways in which power can be saved is to dynamically adjust the rate at which the mobile unit 2 monitors the 'high resolution' radio signals that it uses to self-localise. For example, if the mobile unit 2 is not moving then its position will not change and so there is no need to monitor the 'high resolution' radio signals. By the same token, if the rate of movement of the mobile unit 2 is high, then the update rate will need to be increased. If the update rate of the mobile unit 2 is not high enough then a cycle slip can occur succumbing to the previously mentioned integer ambiguity problem. As a result, a position solution is returned which is mathematically valid, but physically incorrect.

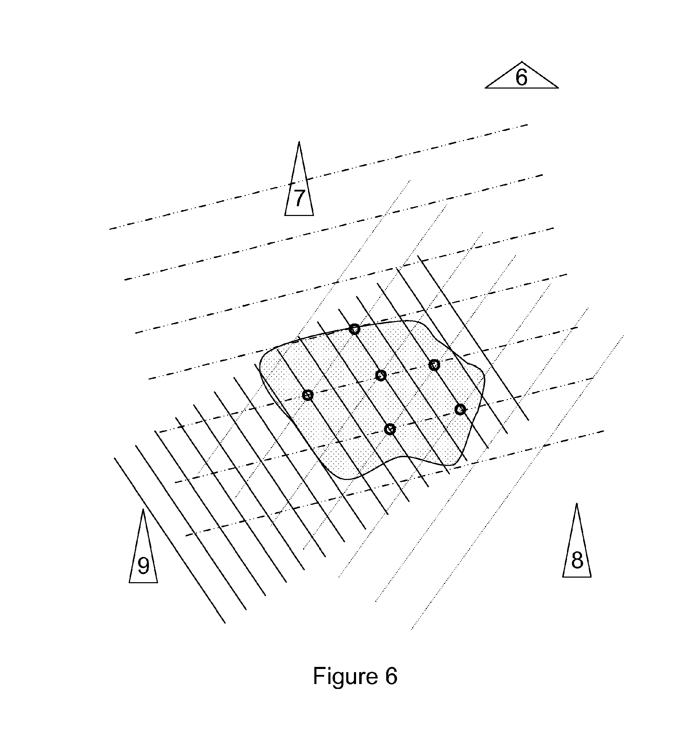

Figure 6, provides a schematic illustration of this problem. The intersection of the wave-fronts of the radio signals from the 'high resolution' transmitters represent mathematically valid solutions for the position of the mobile unit 2 within a given area. If each of the wave-fronts were to be separated by a greater distance (i.e. longer wave-length signals) then the number of possible solutions within a given area is reduced. Therefore, if long wavelengths are used for carrier phase positioning, then the likelihood of cycle slips are reduced. However, long wavelengths provide poorer measurement resolution and so short wavelength / high frequency signals are preferred for localisation. Thus, by choosing a monitoring rate linked to the dynamics of the mobile unit 2, the mobile unit can be tracked frequently enough to avoid cycle slips.

Therefore, the processing unit 30 of the mobile unit 2 is arranged to receive inputs from the IMU 24 about dynamics of the mobile unit 2. This in turn is used to determine an appropriate 'update rate' for the mobile unit 2.

By way of example, a simple law can be derived to determine the update rate required for a carrier phase positioning. In order for a given carrier phase measurement to provide an unambiguous metric, the position of the mobile unit 2 at the moment of measurement must be within half a wavelength of the location predicted by the IMU 24. The variation in expected position caused by an acceleration is given by:

$$d = \frac{1}{2}at^2$$

where d is the displacement caused by the acceleration a operating during the dead time $t$ between measurements (defined by $t = 1/R$, where R is the update rate of the mobile unit 2).

Substituting the restriction on maximum displacement allowed for unambiguous measurements the carrier frequency, and the measurement rate it can be seen that:

$$\frac{\lambda}{2} > \frac{1}{2}.a.\left(\frac{1}{R}\right)^2,$$

$$\Rightarrow a < \frac{cR^2}{f},$$

$$\Rightarrow R > \sqrt{\frac{af}{c}},$$

where c is the speed of radio signal propagation, and f is the carrier frequency.

This law states that for medium wave positioning at a 1Hz update rate, the acceleration of the mobile unit 2 cannot exceed 186ms$^{-2}$ (19g). For VHF based positioning at a 1Hz update rate, the acceleration of the mobile unit 2 cannot exceed 2.8ms$^{-2}$ — a more frequent update rate is therefore preferable. Using a 5Hz update rate, the acceleration limit increase to 69ms$^{-2}$ (7g) which is more than sufficient for a user portable mobile unit 2.

It will be understood that the techniques described above may be extended to encompass variants of the present invention. For example, "time-differenced carrier phase positioning" may be employed in double-difference or triple-difference carrier phase positioning. Furthermore, other differential measurements of the carrier may be used in combination or instead of the carrier phase. For example the techniques described herein can be extended to the application of differential carrier frequency positioning and/or synchronisation.

**Claims**

1.  A method of determining the position of a mobile unit using differential carrier phase positioning as applied to a first radio signal of opportunity having an unpredictable phase modulation scheme, the method comprising:

    phase-synchronising the mobile unit and a reference unit using a second radio signal acting as a common-view phase reference;
    synchronously capturing radio signal data at the mobile unit and the reference unit relating to the first radio signal;
    transmitting radio signal data captured by the reference unit to the mobile unit; and
    comparing, at the mobile unit, the radio signal data captured by the reference unit with that captured by the mobile unit to determine the carrier phase differential of the first radio signal thereby determining a position solution for the position of the mobile unit.

2.  A method as claimed in Claim 1, comprising compressing the captured radio signal data prior to transmission from the reference unit to the mobile unit by translating that radio signal data from the time domain into the frequency domain.

3.  A method as claimed in Claim 1 or Claim 2, wherein the mobile unit determines its position without transmitting information to the reference unit.

4.  A method as claimed in any preceding claim, wherein the method comprises logging state information at the mobile unit, the state information comprising variables and variances associated with the geographical position over time and/or the velocity over time of at least one of:

    the mobile unit, the reference unit, a first radio signal source associated with the first radio signal and a second radio signal source associated with the second radio signal.

5.  A method as claimed in Claim 4, comprising estimating the current and/or future position of the mobile unit, the reference unit, the first radio signal source and/or the second radio signal source from the logged state information.

6.  A method as claimed in Claim 5, wherein the estimating step comprises using a Bayesian estimator such as a Kalman filter, loaded with assumptions and/or models about the behaviour of the mobile unit, the reference unit, the first radio signal source and/or the second radio signal source.

7.  A method as claimed in any one of Claims 4 to 6, wherein variables and variances of the state information are updated in response to at least one of:

    the carrier phase differential determination calculated by the mobile unit in the comparing step;
    an input from an inertial measurement unit (IMU) at the mobile unit;
    an input from a GPS unit at the mobile unit;
    a local clock at the mobile unit;
    user-inputted data entered at the mobile unit; and
    a synchronisation trigger common to the mobile unit and the reference unit.

8.  A method as claimed in any preceding claim, comprising synchronising the reference unit and the mobile unit to a first level of precision prior to the phase-synchronisation step, said phase-synchronisation step being used to improve the synchronisation between the reference unit and the mobile unit to a second level precision.

9.  A method as claimed in any preceding claim, wherein the capture rate of the mobile unit is modified in response to the acceleration of the mobile unit.

10. A method as claimed in any preceding claim comprising using a secondary positioning technique to obtain a position determination of the mobile unit to a precision sufficient to discard a set of incorrect position solutions determined by the comparing step.

11. A method of determining the difference in the carrier phase of a first radio signal having an unpredictable phase modulation scheme as received by a mobile unit relative to a reference unit, the carrier phase difference determination being suitable for synchronising the mobile unit and reference unit and/or localising the mobile unit and/or reference unit, the method comprising:

phase-synchronising the mobile unit and a reference unit using a second radio signal acting as a common-view phase reference;
synchronously capturing radio signal data at the mobile unit and the reference unit relating to the first radio signal;
transmitting radio signal data captured by the reference unit to the mobile unit; and
comparing, at the mobile unit, the radio signal data captured by the reference unit with that captured by the mobile unit to determine the carrier phase differential of the first radio signal.

12. A carrier medium for carrying a computer readable code arranged to control one or more computing devices to carry out the method according to any preceding claim.

13. A mobile unit arranged to carry out a method as claimed in any one of claims 1 to 11 with a cooperative reference unit.

14. A reference unit arranged to carry out a method as claimed in any one of claims 1 to 11 with a cooperative mobile unit.

15. A navigation system comprising at least one mobile unit according to claim 13 and a reference unit according to claim 14, the navigation system being arranged to carry out a method as claimed in any one of claims 1 to 11.

Figure 1

Figure 2

Figure 3

Figure 4

Figure 5

Figure 6

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 0 303 371 A1 (DUFFETT SMITH PETER JAMES) 15 February 1989 (1989-02-15)<br>* column 2, line 40 - column 4, line 53; figure 1 *<br>* column 6, line 16 - column 7, line 22 *<br>* column 7, line 48 - column 8, line 24; figure 2 *<br>* column 11, line 30 - column 14, line 7; figures 7, 8 *<br>----- | 1,3-8,<br>11-15<br>2,9 | INV.<br>G01S5/10<br>G01S5/02 |
| X | US 2002/126046 A1 (COUNSELMAN CHARLES C [US] ET AL COUNSELMAN III CHARLES C [US] ET AL) 12 September 2002 (2002-09-12)<br>* column 1, line 10 - line 25 *<br>* column 3, line 6 - column 6, line 3 *<br>* column 7, line 51 - column 8, line 7 *<br>* column 8, line 66 - column 10, line 59 *<br>* column 12, line 14 - line 30 *<br>* column 18, line 36 - line 61 *<br>----- | 1,3-5,8,<br>10-15 | |
| A | TOBY A WEBB ET AL: "A new differential positioning method using modulation correlation of signals of opportunity", POSITION LOCATION AND NAVIGATION SYMPOSIUM (PLANS), 2010 IEEE/ION, IEEE, PISCATAWAY, NJ, USA,<br>4 May 2010 (2010-05-04), pages 972-981, XP031707045,<br>ISBN: 978-1-4244-5036-7<br>* abstract *<br>* page 973, left-hand column, line 5 - page 976, right-hand column, line 11 *<br>* page 978, left-hand column, line 1 - right-hand column, line 2 *<br>* page 980, right-hand column, line 6 - line 17 *<br>----- | 1-8,<br>10-15 | TECHNICAL FIELDS SEARCHED (IPC)<br><br>G01S |

-/--

The present search report has been drawn up for all claims

| Place of search | Date of completion of the search | Examiner |
|---|---|---|
| Munich | 14 February 2011 | Haugg, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                     

& : member of the same patent family, corresponding
    document

EPO FORM 1503 03.82 (P04C01)

EP 2 395 367 A1

Europäisches Patentamt
European Patent Office
Office européen des brevets

# EUROPEAN SEARCH REPORT

**Application Number**

EP 10 27 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/176196 A1 (HALL CHRISTOPHER J [US] ET AL) 18 September 2003 (2003-09-18) | 2 | |
| A | * abstract * <br> * paragraph [0014] - paragraph [0022] * <br> * paragraph [0051] - paragraph [0052] * <br> * paragraph [0128] - paragraph [0132]; figure 3 * | 1,3, 10-15 | |
| Y | WO 2006/099632 A2 (QUALCOMM INC [US]; PERSICO CHARLES J [US]) 21 September 2006 (2006-09-21) | 9 | |
| A | * abstract * <br> * paragraph [0001] - paragraph [0010] * <br> * paragraph [0042] - paragraph [0044] * <br> * paragraph [0058] * | 4-7 | |

TECHNICAL FIELDS SEARCHED (IPC)

The present search report has been drawn up for all claims

| Place of search | Date of completion of the search | Examiner |
|---|---|---|
| Munich | 14 February 2011 | Haugg, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

**EP 2 395 367 A1**

**ANNEX TO THE EUROPEAN SEARCH REPORT
ON EUROPEAN PATENT APPLICATION NO.**

EP 10 27 5059

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2011

| Patent document cited in search report | | Publication date | Patent family member(s) | | Publication date |
|---|---|---|---|---|---|
| EP 0303371 | A1 | 15-02-1989 | AU | 2120788 A | 09-03-1989 |
| | | | BR | 8807655 A | 05-06-1990 |
| | | | CA | 1314964 C | 23-03-1993 |
| | | | DE | 3879032 D1 | 15-04-1993 |
| | | | DE | 3879032 T2 | 24-06-1993 |
| | | | DK | 34690 A | 09-02-1990 |
| | | | EP | 0377592 A1 | 18-07-1990 |
| | | | ES | 2038758 T3 | 01-08-1993 |
| | | | WO | 8901637 A1 | 23-02-1989 |
| | | | HK | 38994 A | 29-04-1994 |
| | | | JP | 2504673 T | 27-12-1990 |
| | | | NO | 900632 A | 09-04-1990 |
| | | | US | 5045861 A | 03-09-1991 |
| US 2002126046 | A1 | 12-09-2002 | WO | 02057806 A2 | 25-07-2002 |
| US 2003176196 | A1 | 18-09-2003 | US | 2005184907 A1 | 25-08-2005 |
| WO 2006099632 | A2 | 21-09-2006 | AU | 2006225107 A1 | 21-09-2006 |
| | | | CA | 2601203 A1 | 21-09-2006 |
| | | | EP | 1859294 A2 | 28-11-2007 |
| | | | US | 2006211430 A1 | 21-09-2006 |

EPO FORM P0459

For more details about this annex : see Official Journal of the European Patent Office, No. 12/82

25